Europäisches Patentamt

European Patent Office

Office européen des brevets

(19)

(11) Veröffentlichungsnummer : **0 114 995 B2**

## (12) NEUE EUROPÄISCHE PATENTSCHRIFT

(45) Veröffentlichungstag der neuen Patentschrift :
02.05.91 Patentblatt 91/18

(51) Int. Cl.⁵ : **B65B 9/02**, A22C 13/02

(21) Anmeldenummer : 83112601.6

(22) Anmeldetag : 15.12.83

(54) Verfahren zum Verpacken von schlauchförmigen gerafften Nahrungsmittelhüllen und dadurch verpackte Hüllen.

(30) Priorität : 28.12.82 DE 3248338

(43) Veröffentlichungstag der Anmeldung :
08.08.84 Patentblatt 84/32

(45) Bekanntmachung des Hinweises auf die
Patenterteilung :
04.03.87 Patentblatt 87/10

(45) Bekanntmachung des Hinweises auf die
Entscheidung über den Einspruch :
02.05.91 Patentblatt 91/18

(84) Benannte Vertragsstaaten :
BE DE FR

(56) Entgegenhaltungen :
EP-A- 0 004 638
EP-A- 0 012 372
EP-A- 0 021 189
EP-A- 0 027 592
EP-A- 0 066 831
AT-A- 291 099

(56) Entgegenhaltungen :
DE-A- 1 932 620
DE-A- 2 551 452
DE-A- 2 701 251
DE-A- 2 809 585
DE-A- 2 912 720
FR-A- 2 426 557
US-A- 3 971 187
US-A- 4 020 617

(73) Patentinhaber : **Wolff Walsrode
Aktiengesellschaft
Postfach
W-3030 Walsrode 1 (DE)**

(72) Erfinder : **Bandt, Hagen, Dipl.-Ing.
Krummer Weg 6
W-2813 Eystrup (DE)**
Erfinder : **Zündorf, Heinz
Rethemer Strasse 143
W-3030 Walsrode Kirchboitzen (DE)**

(74) Vertreter : **Zobel, Manfred, Dr. et al
c/o BAYER AG Konzernverwaltung RP
Patentabteilung Bayerwerk
W-5090 Leverkusen (DE)**

**Beschreibung**

Die Erfindung betrifft ein Verfahren gemäß Anspruch 1 zur Verpackung von gerafften, schlauchförmigen Nahrungsmittelhüllen, wobei die Hüllen in einem Netz verpackt werden, sowie durch dieses Verfahren in Netzen verpackte, geraffte Nahrungmittelhüllen.

Verpackte, geraffte Nahrungsmittelhüllen werden üblicherweise zur maschinellen Herstellung von Wurst oder ähnlichen Fleischprodukten auf ein Füllrohr gezogen und portionsweise mit Wurstbrät gefüllt.

Dabei ist es bereits bekannt, die geraffte Schlauchhülle für den Transport und für die notwendige Wässerung vor der Verarbeitung mit einem Schlauchnetz zu umgeben (EP-A-0 004 638).

Zum Aufziehen auf das Füllrohr und vor allem zum Fixieren beim automatischen Füllen müssen bei den bisher bekannten Netzumhüllungen an den Enden der gerafften Nahrungsmittelhülle Stützscheiben gegeben werden.

Die bekannten Verfahren zur Herstellung von Netzverpackungen haben durch diese Verwendung von Stützscheiben erhebliche Nachteile. So müssen wegen der unterschiedlichen Durchmesser der Nahrungsmittelhüllen nicht nur eine große Zahl von Stützscheiben bzw. Ringe, sondern auch Netzschläuche mit den unterschiedlichsten Durchmessern bereit gehalten werden.

Eine automatische Verpackung der gerafften Nahrungsmittelhülle mit dem Netzschlauch wird durch das Einlegen der Stützscheiben in den Netzschlauch erheblich erschwert und verteuert.

Es stellte sich die Aufgabe, die bekannten Netzschlauchverpackungen für geraffte Nahrungsmittelhüllen so zu modifizieren, daß auf die Stützscheiben bzw. Ringe verzichtet und eine einheitliche Verpackungsweise für alle Durchmesser und alle Längen von Nahrungsmittelhüllen verwendet werden kann.

Dabei soll die Netzverpackung weiterhin automatisch hergestellt und die verpackte Nahrungsmittelhülle für die weitere, kontinuierliche Verarbeitung an den Füllmaschinen ohne Probleme eingesetzt werden können.

Eine gute Wässerung der Nahrungsmittelhüllen vor der Verarbeitung muß ebenfalls gegeben sein.

Gegenstand der Erfindung ist daher ein Verfahren zum kontinuierlichen Verpacken von gerafften Nahrungsmittelschlauchhüllen in Netzen, wobei man die gerafften Nahrungsmittelschlauchhüllen parallel und in gleichem Abstand zueinander zwischen zwei endlos fortlaufenden Netzfolienbändern mit ihrer Längsachse rechtwinklig zur Laufrichtung der Bänder einlegt, die obere mit unteren Netzfolie jeweils zwischen zwei parallel liegenden gerafften Nahrungsmittelschlauchhüllen versiegelt, wobei das Netz, daß die Nahrungsmittelschlauchhülle schlauchförmig umschließt und die Siegelnähte jeweils zwischen zwei umschlossenen Nahrungsmittelschlauchhüllen einen Steg bzw. eine Siegelkante bilden, wobei der Steg gegebenenfalls perforiert werden kann, und die beiden Enden der gerafften Schlauchhüllen mit der – je nach der Breite der verwendeten Netzfolienbänder – an den beiden Enden jeder Nahrungsmittelschlauchhülle mehr oder weniger überstehende Netzfolie durch Einwirkung von Wärme, vorzugsweise Warmluft, durch Schrumpfen umschließt, wobei eine kreisförmige Öffnung gebildet wird, deren Durchmesser kleiner ist als der Durchmesser der gerafften Nahrungsmittelschlauchhülle.

Dieses erfindungsgemäße Verfahren zum Verpacken von Nahrungsmittelschlauchhüllen in Netzen war auch bei Kenntnis der Lehre der US-PS 4 020 617 nicht naheliegend, da dort nur eine spezielle Verpackungsanordnung von einzelnen Rollen von Haftklebebändern in einer schrumpffähigen Folie empfohlen wird, um eine leichtere Entnahme der einzelnen Rollen zu erreichen.

In Figur 1 wird ein Schema des erfindungsgemäßen Verpakkungsverfahrens dargestellt.

In Figur 2 sind die erfindungsgemäß verpackten, noch zusammenhängenden Nahrungsmittelhüllen zu erkennen.

Figuren 3 und 4 zeigen eine Draufsicht auf eine erfindungsgemäß in einem Netz verpackte, geraffte Nahrungsmittelhülle.

In Figur 5 ist die erfindungsgemäß hergestellte, stirnseitige Öffnung der Netzverpackung und in Fig. 6 die entsprechende Draufsicht auf eine so erfindungsgemäß verpackte Nahrungsmittelhülle gezeigt.

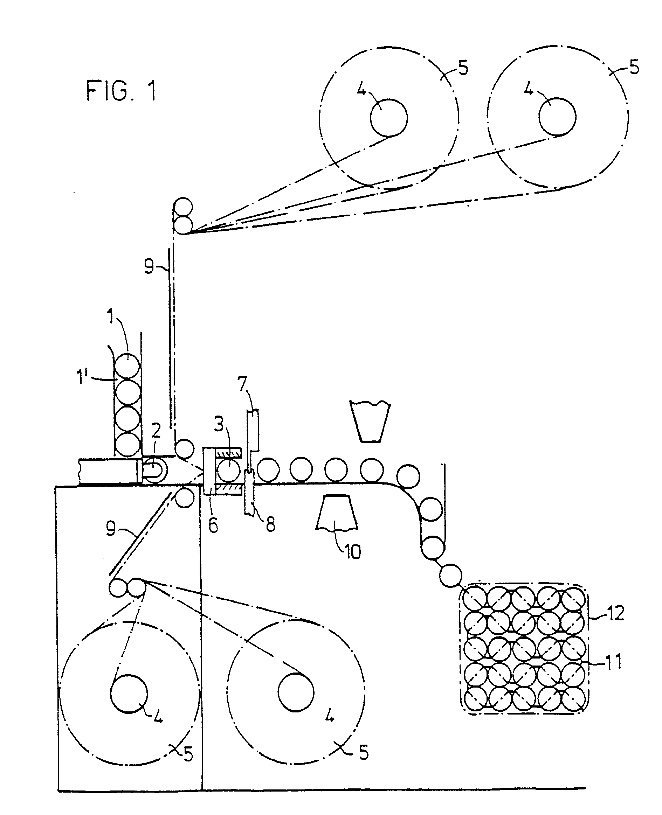

Vorzugsweise können die gerafften Nahrungsmittelhüllen erfindungsgemäß verpackt werden, wie es schematisch in Fig. 1 gezeigt wird. Die auf einer handelsüblichen Raffmaschine zu einem Hohlstab gerafften Nahrungsmittelhüllen (Raffraupen) (1) werden von Hand bzw. bei großen Stückzahlen automatisch in das Magazin (1') gelegt und stirnseitig auf genaue Länge fixiert. Über eine Verschiebeeinheit (2) werden die Raffraupen der Verpackungseinheit (3) zugeführt, in die von den Rollen (4) die Netzfolienbänder (5) eingebracht werden.

Während der Verschiebung wird die Raffraupe zwischen dem oben und unten laufenden Netzfolienband gebracht und in der Verpackungseinheit mit Hilfe der Siegelbalken (7) und (8) nacheinander beidseitig in die Netzfolie eingesiegelt. In dem zwischen zwei Raffraupen entstehenden Siegelsteg kann mit dem Siegelbalken (7) auch eine Perforationsnaht gemacht werden. Der Weitertransport der umhüllten Raffraupen erfolgt durch den unteren Siegelbalken (8) bis zur Warmluftdusche (10), bei der die an beiden Enden der Raffraupe überstehenden Teile der Netzfolienbänder eingeschrumpft und die Raffraupe so auch an ihren Enden axial fixiert wird. Der Durchmesser der Öffnung der Netzverpackung wird im wesentlichen durch den Überstand der Netzfolienbänder bestimmt.

In einem Stapelmagazin (11) können die verpackten Raffraupen als endloses Band gelagert und in einer Verpackung (12) gelagert werden.

Gemäß einer weiteren bevorzugten Ausführungsform können die an beiden Enden der Raffraupe überstehenden Teile der Netzfolienbänder zum Teil über den die Nahrungsmittelhülle haltenden Netzschlauch gestülpt werden, wobei ein Überstand des Netzes über das jeweilige Ende der Raffraupe bleiben soll. Der übergestülpte, überstehende Teil des Netzes wird dann radial zur Nahrungsmittelhülle und den sie umhüllenden Netzschlauch verdreht, wobei eine irisblendenförmige Öffnung entsteht, deren Durchmesser kleiner als der Durchmesser der gerafften Nahrungsmittelhülle ist und die auch durch Wärmeeinwirkung, vorzugsweise durch Warmluft, in ihrer Form stabilisiert werden kann.

Durch die nach dem Umstülpen verbleibenden Länge des überstehenden Netzteiles über die Enden der gerafften Nahrungsmittelhülle, aber im wesentlichen durch die Größe des Verdrehwinkels kann der Durchmesser der stirnseitigen Öffnung der Netzverpackung variiert werden.

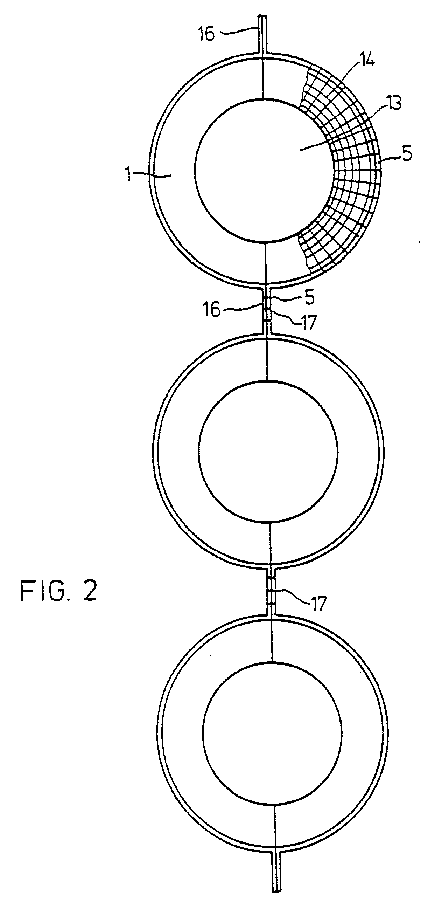

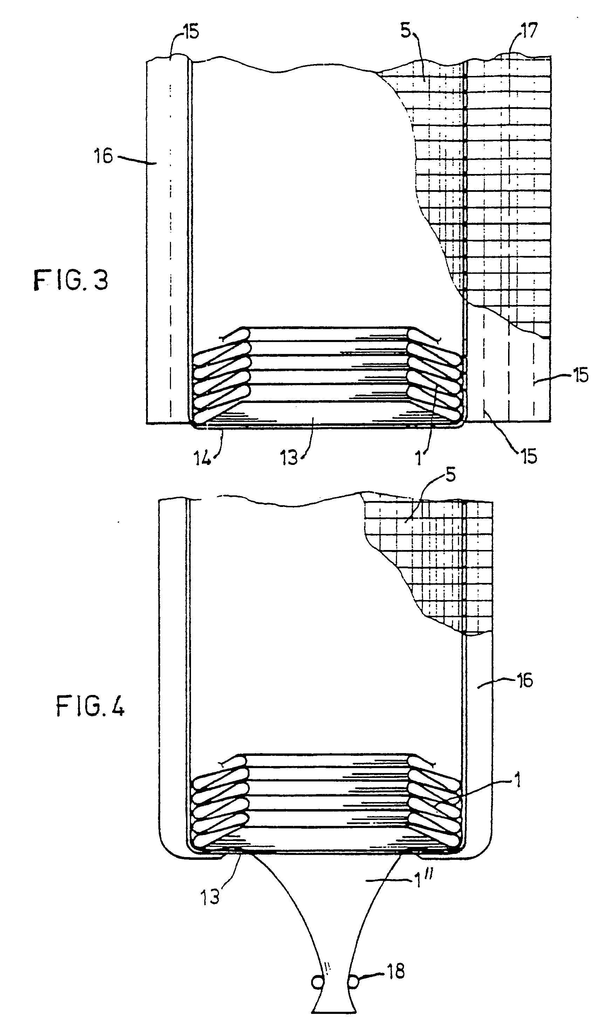

Schematisch sind die erfindungsgemäß verpackten, zusammenhängenden Nahrungsmittelhüllen in Fig. 2 dargestellt, wobei die erfindungsgemäße, stirnseitige Fixierung der Raffraupen (1) durch die Verpackung dargestellt ist. Insbesondere zeigt Fig. 2 wie die Netzfolie (5) durch Schrumpfen in der Wärme die Nahrungsmittelhülle (1) an ihrem Ende umschließt (14) und dabei eine kreisrunde Öffnung (13) bildet, deren Durchmesser zwar kleiner als der Durchmesser der gerafften Nahrungsmittelhülle ist, durch die aber die Hülle beim Füllen problemlos entnommen werden kann. An beiden Seiten der Verpackung entsteht durch das Versiegeln der beiden Netzfolienbänder ein Siegelsteg (16), der die Siegelnaht (15) und eine Perforationsnaht (17) aufweist. Fig. 3 zeigt eine Draufsicht auf eine wie oben beschriebene, in einem Netz (5) verpackte, geraffte Nahrungsmittelhülle (1). Fig. 4 zeigt eine Draufsicht einer wie oben beschriebenen, in einem Netz verpackten, gerafften Nahrungsmittelhülle (1), deren Hüllenende (12) durch die von dem Verpackungsnetz (5) gebildeten Öffnung (13) herausgeführt und mit einem Clip (18) verschlossen ist.

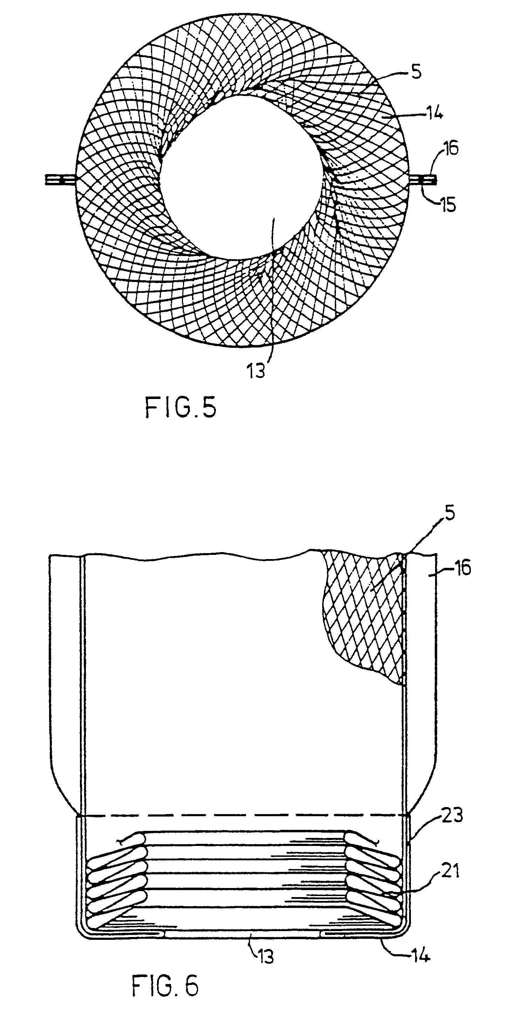

In Fig. 5 ist die erfindungsgemäß hergestellte, stirnseitige Öffnung (13) der Netzverpackung (5) und (14) gezeigt, deren irisblendenartige Gestaltung durch Verdrehen des übergestülpten Netzrandes (23) zustandekommt.

In Fig. 6 ist eine entsprechende Draufsicht auf eine geraffte Nahrumgsmittelhülle (1) dargestellt die in einem Netz mit Siegelsteg (16) verpackt ist, wobei die überstehenden Netzbänder über das die Nahrungsmittelhülle umschließende Netz wie eine Manschette (23) gestülpt sind und durch Verdrehen und Thermofixieren die irisblendenartige Öffnung (13) gebildet werden.

Als Verpackungsnetzbahnen eignen sich alle bekannten, üblichen Kunststoffnetze, vorzugsweise Polyethylennetze, die gegebenenfalls doppellagig verwendet werden können.

Die erfindungsgemäß verpackten, endlos zusammenhängenden gerafften Nahrungsmittelhüllen eignen sich vorzüglich zur magazinierten automatischen Beschickung auf automatisch arbeitenden Abfüllmaschinen.

## Ansprüche

1. Verfahren zum kontinuierlichen Verpacken von gerafften Nahrungsmittelschlauchhüllen (1) in Netzen (5), wobei man die gerafften Nahrungsmittelschlauchhüllen parallel und in gleichem Abstand zueinander zwischen zwei endlos fortlaufenden Netzfolienbändern mit ihrer Längsachse rechtwinklig zur Laufrichtung der Bänder einlegt, die obere mit der unteren Netzfolie jeweils zwischen zwei parallel liegenden gerafften Nahrungsmittelschlauchhüllen versiegelt, wobei das Netz die Nahrungsmittelschlauchhülle schlauchförmig umschließt und die Siegelnähte (15) jeweils zwischen zwei umschlossenen Nahrungsmittelschlauchhüllen (1) einen Steg (16) bilden und der Steg gegebenenfalls perforiert wird, und die beiden Enden der Nahrungsmittelschlauchhülle mit der – je nach der Breite der verwendeten Netzfolienbänder – an den beiden Enden jeder Nahrungsmittelschlauchhülle mehr oder weniger überstehenden Netzfolie unter Einwirkung von Wärme durch Schrumpfen umschlossen werden, wobei eine kreisförmige Öffnung (13) gebildet wird, deren Durchmesser kleiner ist als der Durchmesser der gerafften Nahrungsmittelschauchhülle.

2. Verfahren nach Anspruch 1, dadurch gekennzeichnet, daß die an beiden Enden (14) der gerafften Schauchhülle (1) überstehenden Teile der Netzfolienbänder (5) teilweise über den die Nahrungsmittelhülle umschließende Netzschlauch gestülpt werden, wobei ein Überstand des Netzes über die Schlauchhüllenenden bleibt, der übergestülpte, überstehenden Teil (23) des Netzes radial zur Schlauchhülle und den sie umhüllenden Netzschlauch verdreht wird, wodurch eine irisblendenförmige Öffnung (13) entsteht, deren Durchmesser kleiner als der Durchmesser der gerafften Nahrungsmittelhülle ist und die durch Wärmeeinwirkung in ihrer Form stabilisiert wird.

3. Verfahren nach Ansprüche 1 oder 2, dadurch gekennzeichnet, daß Polethylennetze verwendet werden.

## Claims

1. Process for the continuous packing of shirred tubular food casings (1) in nets (5), in which the shirred tubular food casings are introduced parallel to each other and at an identical distance from each other between two endlessly running net film belts, with their longitudinal axes at right angles to the direction of movement of the belts, the upper net film is sealed with the lower net film, in each case between two shirred tubular food casings lying parallel to each other, the net enclosing the tubular food casing in the manner of a tube, and the seal seams (15), in each case between two enclosed tubular food casings (1) form a bridge (16), the bridge being optionally perforated, and the net film projecting to a greater or lesser extent over both ends of each tubular food casing – depending on the width of the net film belts which are used – encloses the two ends of the tubular food casing under the effect of heat, by shrinking, a circular opening (13) being formed, the diameter of which is smaller than the diameter of the shirred tubular food casing.

2. Process according to Claim 1, characterised in that the parts of the net film belts (5) projecting beyond both ends (14) of the shirred tubular casing (1) are partly turned back over the net tube enclosing the tubular food casing, a projection of the net remaining over the ends of the tubular casing, the turned back projecting part (23) of the net is twisted radially relative to the tubular casing and the net tube surrounding it, an iris-diaphragm-shaped opening (13) being produced, the diameter of which is smaller than the diameter of the shirred food casing and which is stabilised in shape by the effect of heat.

3. Process according to Claims 1 or 2, characterised in that polyethylene nets are used.

## Revendications

1. Procédé pour emballer en continu, dans des filets (5), des enveloppes souples (1) pour aliments repliées sur elles-mêmes, dans lequel on insère les enveloppes souples pour aliments repliées sur elles-mêmes, parallèlement et avec la même distance mutuelle, entre deux bandes de feuilles réticulaires défilant en continu, l'axe longitudinal des enveloppes étant perpendiculaire à la direction du défilement des bandes ; on scelle la feuille réticulaire supérieure avec la feuille réticulaire inférieure, à chaque fois entre deux enveloppes souples pour aliments repliées sur elles-mêmes et s'étendant parallèlement, le filet entourant l'enveloppe souple pour aliments à la manière d'un boyau et les joints scellés (15) formant une nervure (16) entre deux enveloppes souples respectives (1) pour aliments entourées, la nervure étant éventuellement perforée ; et les deux extrémités de l'enveloppe souple pour aliments sont entourées, par contraction sous l'action de la chaleur, par la feuille réticulaire dépassant plus ou moins des deux extrémités de chaque enveloppe souple pour aliments – en fonction de la largeur des bandes de feuilles réticulaires employées –, ce qui forme une ouverture circulaire (13) dont le diamètre est plus petit que le diamètre de l'enveloppe souple pour aliments repliée sur elle-même.

2. Procédé selon la revendication 1, caractérisé par le fait que les parties des bandes (5) de feuilles réticulaires qui dépassent des deux extrémités (14) de l'enveloppe souple (1) repliée sur elle-même sont partiellement enfilées sur le boyau en filet entourant l'enveloppe à aliments, une saillie du filet subsistant sur les extrémités de l'enveloppe souple, une torsion étant imprimée à la partie saillante enfilée (23) du filet, radialement par rapport à l'enveloppe souple et au boyau en filet qui l'entoure, ce qui donne naissance à une ouverture (13) du type diaphragme dont le diamètre est plus petit que le diamètre de l'enveloppe à aliments repliée sur elle-même, et dont la forme est stabilisée sous l'action de la chaleur.

3. Procédé selon la revendication 1 ou 2, caractérisé par le fait qu'on utilise des filets en polyéthylène.

FIG. 1

FIG. 2

FIG. 3

FIG. 4

FIG.5

FIG. 6